# FASCICULE DE BREVET EUROPEEN

(11) **EP 3 839 458 B1**
(45) Date de publication et mention de la délivrance du brevet: **22.06.2022**
(21) Numéro de dépôt: 20212344.4
(22) Date de dépôt: 08.12.2020
(51) Int. Cl.: G01K 11/12, H01M 50/24, H01M 10/42, H01M 10/48, H01M 10/613, H01M 10/627, H01M 10/637, H01M 10/6551, H01M 10/658, H01M 50/204, H01M 50/222, H01M 50/249, G01K 11/125

(54) **DISPOSITIF DE STOCKAGE D'ÉNERGIE COMPRENANT UN INDICATEUR THERMO-CHROMATIQUE**
ENERGIESPEICHER MIT EINEM THERMOCHROMATISCHEN INDIKATOR
ENERGY STORAGE DEVICE COMPRISING A THERMO-CHROMATIC INDICATOR

(30) Priorité: 18.12.2019 FR 1914798
(43) Date de publication de la demande: 23.06.2021
(73) Titulaire: Renault s.a.s, 92100 Boulogne Billancourt (FR)
(72) Inventeur: GYAN, Philippe, 92500 Rueil Malmaison (FR)
(74) Mandataire: Renault Group

(56) Documents cités:
- EP-A1- 3 043 416
- US-A1- 2017 358 831
- US-A1- 2018 097 264

## Description

### Domaine Technique de l'invention

L'invention concerne un dispositif de stockage d'énergie comprenant un ensemble d'accumulateurs. L'invention porte aussi sur un système de contrôle comprenant un tel dispositif de stockage d'énergie. L'invention porte encore sur un procédé de contrôle d'un tel dispositif de stockage d'énergie.

### Etat de la technique antérieure

Les véhicules électriques sont équipés de dispositifs de stockage d'énergie pour fournir à un moteur électrique l'énergie nécessaire à faire avancer le véhicule. De tels dispositifs de stockage d'énergie, comprennent un ensemble d'accumulateurs électrochimiques couramment dénommés selon l'anglicisme "pack batterie" ou "battery pack", ou même plus simplement "batterie". Lorsque ces dispositifs de stockage d'énergie ne sont plus aptes à une application automobile (par exemple en raison de pertes en densité d'énergie et/ou en densité de puissance), ils peuvent ensuite être utilisés comme des éléments de stockage d'énergie pour des installations stationnaires dans le cadre d'une utilisation dite de « seconde vie », la « première vie » étant l'utilisation initiale pour la traction d'un véhicule. Ces dispositifs de stockage d'énergie peuvent par exemple être utilisés dans un bâtiment pour stocker de l'énergie issue d'une source d'énergie renouvelable.

Un inconvénient de tels ensembles d'accumulateurs est qu'ils produisent de fortes quantités de chaleur durant leur utilisation, en charge comme en décharge. Et, lorsqu'ils sont soumis à de trop fortes températures, la durée de vie de ces ensembles d'accumulateurs peut être réduite. En particulier dans le cadre d'une application stationnaire, lorsqu'un ensemble d'accumulateur est de surcroît soumis à un rayonnement tel que celui produit par la lumière du soleil, il peut s'échauffer fortement et être endommagé. Pour contrôler la température des ensembles d'accumulateurs, on connaît l'utilisation de capteurs de type thermocouples mais ceux-ci sont complexes à mettre en oeuvre et onéreux.

On connaît grâce au brevet KR20060034819A une batterie dont une surface extérieure est pourvue de pigments thermo-chromatiques. Une observation visuelle permet d'estimer grossièrement la température de la batterie. Toutefois une telle méthode est imprécise et requiert une surveillance visuelle en continu de la batterie.

Les dispositifs de stockage d'énergie connus de l'état de la technique, notamment en utilisation stationnaire, ne comprennent pas toujours de moyen précis d'estimation de leur température. Ils ne comprennent pas non plus de moyen de protection efficace permettant d'éviter un échauffement excessif. Finalement, les procédés connus de régulation de la température connus ne permettent pas toujours de préserver la durée de vie des ensembles d'accumulateurs de manière optimale, notamment en utilisation stationnaire.

Par exemple, le document EP3043416A1 qui décrit un dispositif de surveillance de la température d'une batterie, présente des d'inconvénients de cet ordre.

US 2018/097264A1 décrit une batterie pour avion comportant plusieurs indicateurs thermo-chromatiques disposés sur les cellules élémentaires (114, 116), sur la batterie (118), ainsi que sur le boîtier de la batterie (120). Un capteur optique (130) observe ces indicateurs afin d'informer un utilisateur de la température aussi bien actuelle que historique des cellules électrochimiques.

US 2017/358831 A1 décrit un dispositif de stockage d'énergie électrique comprenant une enveloppe externe résistante à l'énergie solaire (104), ainsi qu'un thermocouple à l'intérieur du pack de batterie (132).

### Présentation de l'invention

Le but de l'invention est de fournir un dispositif de stockage d'énergie remédiant aux inconvénients ci-dessus et améliorant les dispositifs de stockage d'énergie connus de l'art antérieur.

Plus précisément, un premier objet de l'invention est un dispositif de stockage d'énergie permettant de connaitre de manière simple et précise la température d'un ensemble d'accumulateurs contenu dans le dispositif de stockage d'énergie.

Un second objet de l'invention est un dispositif de stockage d'énergie permettant de limiter la température de l'ensemble d'accumulateurs même lorsque celui-ci est exposé en plein soleil.

### Résumé de l'invention

L'invention se rapporte à un dispositif de stockage d'énergie comprenant un ensemble d'accumulateurs et un élément thermo-conducteur, la température de l'élément thermo-conducteur étant apte à varier en fonction d'une température de l'ensemble d'accumulateurs, l'élément thermo-conducteur comprenant un indicateur thermo-chromatique, le dispositif de stockage d'énergie comprenant en outre un capteur optique configuré pour observer l'indicateur thermo-chromatique.

Le capteur optique peut comprendre une ou plusieurs photodiodes.

Le dispositif de stockage d'énergie comprend une enveloppe externe enveloppant l'ensemble d'accumulateurs, l'enveloppe externe étant recouverte au moins partiellement d'un revêtement de peinture thermo-isolante à base de céramique, l'enveloppe externe comprenant une zone dépourvue du revêtement de peinture, ladite zone comprenant l'élément thermo-conducteur.

Le revêtement de peinture thermo-isolante peut comprendre un coefficient d'absorption solaire inférieur ou égal à 0.4, notamment inférieur ou égale à 0.2.

L'élément thermo-conducteur peut être en contact direct avec l'ensemble d'accumulateurs.

L'élément thermo-conducteur peut comprendre un matériau dont la conductivité thermique est supérieure ou égale à 120 W/m/K, voire supérieure ou égale à 150 W/m/K.

L'élément thermo-conducteur peut comprendre un moyen de dissipation thermique.

L'élément thermo-conducteur peut comprendre un moyen de fixation magnétique et/ou l'élément thermo-conducteur peut être accolé à l'ensemble d'accumulateurs par l'intermédiaire d'une pâte thermo-conductrice comblant un volume entre une surface de de l'ensemble d'accumulateurs et une surface de l'élément thermo-conducteur.

L'invention se rapporte également à un système de contrôle comprenant :
- un dispositif de stockage d'énergie tel que défini précédemment,
- un capteur de tension apte à mesurer une tension aux bornes de l'ensemble d'accumulateurs,
- un moyen de refroidissement du dispositif de stockage d'énergie,
- une unité de commande électronique reliée au capteur optique du dispositif de stockage d'énergie, au capteur de tension et au moyen de refroidissement.

Le moyen de refroidissement peut être alimenté en énergie par le dispositif de stockage d'énergie.

Le procédé de contrôle peut comprendre:
- une étape d'observation de l'indicateur thermo-chromatique par le capteur optique du dispositif de stockage d'énergie,
- une étape de calcul de l'état de charge de l'ensemble d'accumulateurs,
- une étape de calcul d'une commande du dispositif de stockage d'énergie en fonction de l'observation de l'indicateur thermo-chromatique, et/ou en fonction de l'état de charge de l'ensemble d'accumulateurs et/ou en fonction d'un objectif de durabilité de l'ensemble d'accumulateurs.

Le procédé de contrôle peut comprendre une étape de refroidissement du dispositif de stockage d'énergie par un moyen de refroidissement alimenté en énergie par l'ensemble d'accumulateurs, un niveau de température d'arrêt de l'étape de refroidissement étant calculé en fonction de l'état de charge de l'ensemble d'accumulateurs et/ou en fonction d'un objectif de durabilité de l'ensemble d'accumulateurs.

L'invention se rapporte également à un produit programme d'ordinateur comprenant des instructions de code de programme enregistrées sur un support lisible par ordinateur pour mettre en œuvre les étapes du procédé de contrôle tel que défini précédemment lorsque ledit programme fonctionne sur un ordinateur. L'invention se rapporte aussi à un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en œuvre le procédé de contrôle tel que défini précédemment. L'invention se rapporte également à un support d'enregistrement de données, lisible par un ordinateur, sur lequel est enregistré un programme d'ordinateur comprenant des instructions de code de programme de mise en œuvre du procédé de contrôle tel que défini précédemment. L'invention se rapporte aussi à un support d'enregistrement lisible par ordinateur comprenant des instructions qui, lorsqu'elles sont exécutées par un ordinateur, conduisent celui-ci à mettre en œuvre le procédé de contrôle tel que défini précédemment.

L'invention se rapporte également à un signal d'un support de données, portant le produit programme d'ordinateur tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un système de contrôle comprenant un dispositif de stockage d'énergie selon un mode de réalisation de l'invention.
[Fig. 2] La figure 2 est graphique montrant le coefficient d'absorption de différentes couleurs.
[Fig. 3] La figure 3 est un graphique montrant l'évolution de la température de deux différents dispositifs de stockage d'énergie en fonction du temps.
[Fig. 4] La figure 4 est un graphique montrant des limitations d'un état de charge d'un dispositif de stockage d'énergie en fonction de la température et en fonction d'un objectif de durée de vie du dispositif de stockage d'énergie.

### Description détaillée

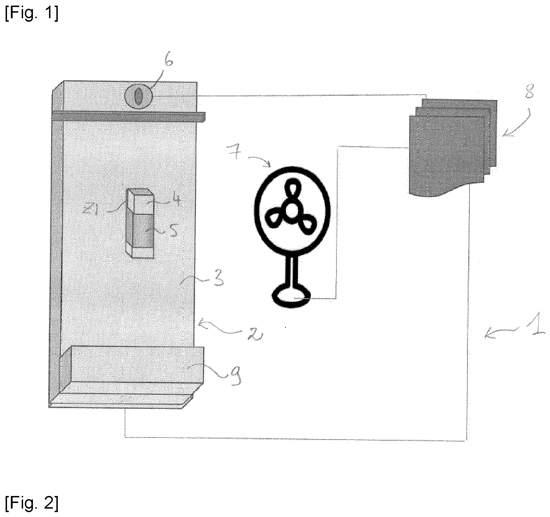

La figure 1 illustre schématiquement un système de contrôle 1 selon un mode de réalisation de l'invention. Le système de contrôle 1 comprend un dispositif de stockage d'énergie 2 selon un mode de réalisation de l'invention. Le dispositif de stockage d'énergie 2, que l'on pourrait également dénommer "batterie", comprend un ensemble d'accumulateurs électrochimiques. Les accumulateurs sont aptes à stocker de l'énergie sous forme chimique et à la restituer sous forme d'un courant électrique. Les accumulateurs sont rechargeables, c'est-à-dire ils forment une batterie secondaire, et peuvent ainsi être utilisés de nombreuses fois. Les accumulateurs peuvent être par exemple du type "lithium-ion". L'ensemble d'accumulateurs peut être recouvert par une enveloppe externe 3 qui les protège. L'enveloppe externe 3 peut être par exemple en tôle métallique. En variante, elle pourrait également être en plastique ou en tout autre matériau.

Le dispositif de stockage d'énergie 2 comprend en outre un élément thermo-conducteur 4, c'est-à-dire un élément comprenant de bonnes propriétés de conduction de la chaleur, par opposition à un matériau isolant. La température de l'élément thermo-conducteur est apte à varier en fonction d'une température de l'ensemble d'accumulateurs. Autrement dit, l'élément thermo-conducteur est mis au contact de l'ensemble d'accumulateurs et en perçoit des variations de température. Notamment, en régime stationnaire, la température de l'élément thermo-conducteur peut être égale ou sensiblement égale à une température de l'ensemble d'accumulateurs. A cet effet, l'élément thermo-conducteur comprend de préférence un matériau dont la conductivité thermique est supérieure ou égale à 120 W/m/K, voire supérieure ou égale à 150 W/m/K. L'élément thermo conducteur comprend donc une conductivité thermique nettement supérieure à la conductivité du Lithium qui est de 80 W/m/K. L'élément thermo-conducteur peut par exemple être constitué d'aluminium et/ou de cuivre. L'élément thermo-conducteur forme une sonde de température permettant de mesurer facilement une température de l'ensemble d'accumulateurs.

L'élément thermo-conducteur 4 est positionné au moins en partie à l'extérieur de l'enveloppe externe 3, de sorte à être apparent. Il peut comprendre une partie en contact direct avec l'ensemble d'accumulateurs. L'élément thermo-conducteur peut être maintenu en contact avec l'ensemble d'accumulateurs par un insert aux propriétés magnétiques. Ceci permet d'éviter des modifications structurelles de l'ensemble d'accumulateur ou de son cadre de maintien. L'élément thermo-conducteur peut être accolé à l'ensemble d'accumulateurs par l'intermédiaire d'une pâte (ou "gap-filler") thermo-conductrice comblant un volume entre une surface de de l'ensemble d'accumulateurs et une surface de l'élément thermo-conducteur.

L'élément thermo-conducteur comprend en outre un moyen de dissipation thermique. Le moyen de dissipation thermique peut comprendre par exemple une forme en U, en T inversé, ou profilé carré avec ou sans perçage. Il peut également comporter une ou plusieurs ailettes de refroidissement. L'élément thermo-conducteur remplit donc une première fonction de dissipation de la chaleur produite par l'ensemble d'accumulateurs.

L'élément thermo-conducteur 4 comprend un indicateur thermo-chromatique 5. L'indicateur thermo-chromatique 5 est un indicateur dont la couleur ou la transparence change en fonction de la température. Il permet donc de rendre compte de la température de l'ensemble d'accumulateurs. Il peut se trouver par exemple sous la forme d'une pastille adhésive collée sur l'élément thermo-conducteur ou sous la forme d'une peinture thermo-chromatique appliquée localement sur l'élément thermo-conducteur. L'indicateur thermo-chromatique peut en outre comprendre des propriétés thermo-isolante afin d'augmenter un contraste de changement de couleur de l'indicateur. Avantageusement, l'indicateur thermo-chromique 5 peut être positionné à une extrémité du moyen de dissipation thermique de l'élément thermo-conducteur, notamment à une extrémité d'une ailette de refroidissement. Il peut être positionné sur une partie de l'élément thermo-conducteur présentant une plus grande différence de température. L'enveloppe externe 3 peut en outre être recouverte au moins partiellement d'un revêtement de peinture thermo-isolante, notamment de peinture thermo-isolante à base de céramique. Un tel revêtement permet de protéger les accumulateurs des sources de chaleurs extérieures. L'enveloppe externe peut être totalement recouverte par le revêtement à l'exception d'une zone Z1, dépourvue de revêtement de peinture, dans laquelle est agencé l'élément thermo-conducteur 4. Ainsi le revêtement de peinture thermo-isolante ne fait pas obstacle au transfert de chaleur de l'ensemble d'accumulateurs vers l'élément thermo-conducteur 4. Cet agencement permet de concentrer l'évacuation de la chaleur produite par l'ensemble d'accumulateurs au niveau de l'élément thermo-conducteur 4.

L'épaisseur du revêtement de peinture peut être inférieure ou égale à 0.3mm. La peinture peut être appliquée sur l'enveloppe externe avec un pinceau, un rouleau, par projection aérosol ou encore par tout autre moyen approprié. Avantageusement, le revêtement de peinture thermo-isolante comprend un coefficient d'absorption solaire inférieur ou égal à 0.4, notamment inférieur ou égale à 0.2. Le coefficient d'absorption solaire d'une surface exprime, par un nombre compris en 0 et 1, le pourcentage de l'énergie radiante incidente absorbé par cette surface. Le rayonnement qui n'est pas absorbé est réfléchi et n'est donc pas absorbé et transformé en chaleur.

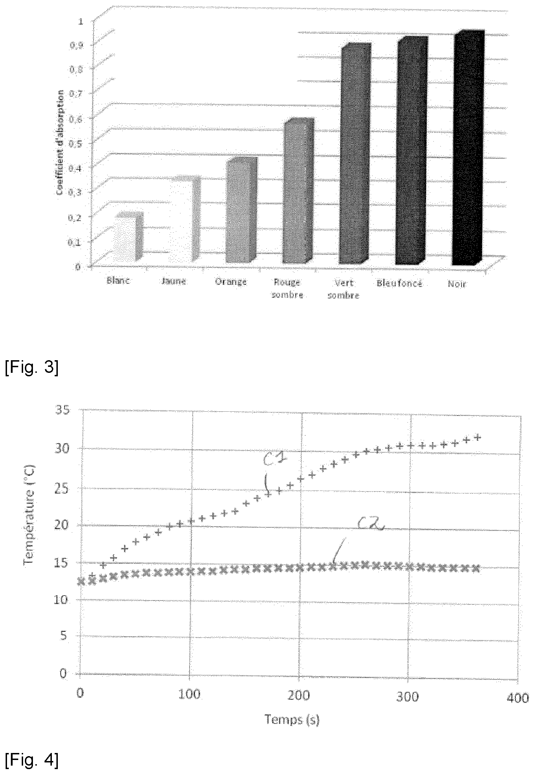

La figure 2 illustre le coefficient d'absorption de différentes couleurs, à savoir de gauche à droite : le blanc, le jaune, l'orange, le rouge sombre, le vert sombre, le bleu foncé et le noir. Avantageusement, le revêtement de peinture est donc de couleur blanche, ou tout au moins de couleur claire. Ainsi, les rayonnements lumineux, notamment les rayonnements lumineux provenant de la lumière du soleil sont davantage réfléchis et peu absorbés par l'enveloppe externe 3.

La figure 3 illustre l'évolution de la température de deux dispositifs de stockage d'énergie identiques mais de couleurs différentes, lorsqu'ils sont soumis à un rayonnement lumineux donné. Le premier relevé de mesures C1 illustre l'évolution de la température d'un dispositif de stockage d'énergie de couleur noire. Le deuxième relevé de mesures C2 illustre l'évolution de la température d'un dispositif de stockage d'énergie dont l'enveloppe externe est de couleur blanche. Au bout de 300 secondes d'exposition à un rayonnement lumineux donné, on observe que le dispositif de stockage d'énergie de couleur blanche est environ 15°C plus froid que le dispositif de stockage d'énergie de couleur noire.

Le dispositif de stockage d'énergie comprend en outre un capteur optique 6 configuré pour observer l'indicateur thermo-chromatique. Notamment, le capteur optique est orienté de manière à pouvoir détecter des variations de couleur de l'indicateur thermo-chromatique. Le capteur optique peut comprendre une ou plusieurs photodiodes. Une photodiode est un composant électronique apte à capter un rayonnement du domaine optique et de le transformer en un signal électrique.

Le système de contrôle 1 comprend en outre :
- un capteur de tension 9 apte à mesurer une tension aux bornes de l'ensemble d'accumulateurs,
- un moyen de refroidissement 7 du dispositif de stockage d'énergie, et
- une unité de commande électronique 8 reliée au capteur optique 6 du dispositif de stockage d'énergie, au capteur de tension et au moyen de refroidissement 7.

Le moyen de refroidissement 7 est configuré pour abaisser la température du dispositif de stockage d'énergie 2 jusqu'à une valeur déterminée. Le moyen de refroidissement peut comprendre un moyen de brasser un flux d'air, comme par exemple un ventilateur. Il pourrait également comprendre un circuit de refroidissement parcouru par un réfrigérant liquide. Ce circuit de refroidissement peut lui-même aussi refroidir de l'air, qui sera ensuite soufflé ou brassé vers le dispositif de stockage d'énergie.

L'unité de commande électronique 8 comprend notamment un microprocesseur, une mémoire, et des moyens de connexion avec le capteur optique 6, le capteur de tension et le moyen de refroidissement 7. La mémoire de l'unité de commande électronique 8 comprend des instructions de code pour la mise en œuvre d'un procédé de contrôle du dispositif de stockage d'énergie 2 selon un mode de réalisation de l'invention.

Lorsque le dispositif de stockage d'énergie est utilisé, notamment lorsqu'il est utilisé pour produire de l'énergie électrique ou lorsqu'il est en train d'être rechargé, la température de l'ensemble d'accumulateur augmente. La chaleur produite est transmise à l'élément thermo-conducteur de sorte que sa température augmente également. L'indicateur thermo-chromatique 5 change alors de couleur.

Dans une première étape, on observe l'indicateur thermo-chromatique avec le capteur optique 6 du dispositif de stockage d'énergie. Les variations de couleur de l'indicateur thermo-chromatique sont calibrées pour être mises en correspondance avec des variations de température déterminées de l'élément thermo-conducteur. Le capteur optique produit un signal électrique qui est fonction de la couleur de l'indicateur thermo-chromatique. Ce signal électrique est converti en une température de l'ensemble d'accumulateurs par l'unité de commande électronique grâce à une table de correspondance.

Dans une deuxième étape, on calcule l'état de charge de l'ensemble d'accumulateurs. Ce calcul peut notamment être basé sur la mesure de la tension aux bornes de l'ensemble d'accumulateurs tel que fournie par le capteur de tension 9.

Dans une troisième étape, on calcule une loi de commande du dispositif de stockage d'énergie en fonction de l'observation de l'indicateur thermo-chromatique. Par exemple, on peut modérer un courant de charge ou un courant de décharge issu du dispositif de stockage d'énergie de manière à faire baisser sa température ou limiter son augmentation. La loi de commande permet de contrôler ou de réguler une température de l'ensemble d'accumulateurs et/ou un état de charge de l'ensemble d'accumulateurs, afin de prolonger sa durée de vie. Concrètement, pour un objectif de durée de vie de l'ensemble d'accumulateurs donné, on peut définir une courbe d'état de charge de l'ensemble d'accumulateurs en fonction de sa température. La loi de de commande calculée lors de la troisième étape permet de faire fonctionner l'ensemble d'accumulateurs de sorte à ne pas dépasser la température et l'état de charge prescrit.

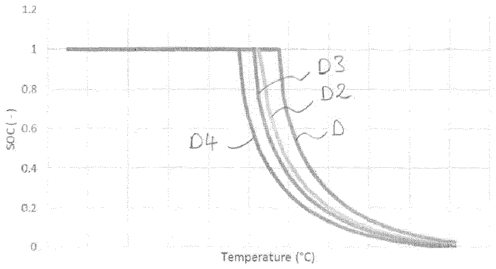

La figure 4 illustre à titre d'exemple la limitation d'un état de charge (SOC) d'un dispositif de stockage d'énergie en fonction de la température et en fonction d'un objectif de durée de vie du dispositif de stockage d'énergie : une première courbe D1 correspond à un objectif de durée de vie de 5 ans. Une deuxième courbe D2 correspond à un objectif de durée de vie de 8 ans. Une troisième courbe D3 correspond à un objectif de durée de vie de 10 ans. Une quatrième courbe D4 correspond à un objectif de durée de vie de 15 ans. En fonction d'un objectif de durée de vie fixé et en fonction de la température estimée lors de la première étape, on peut donc calculer un état de charge maximal de l'ensemble d'accumulateurs. De même, en fonction d'un objectif de durée de vie fixé et en fonction d'un état de charge estimé lors de la deuxième étape, on peut calculer une température maximale de l'ensemble d'accumulateurs. Autrement dit, le graphique de la figure 4 permet d'identifier les zones de température et d'état de charge à ne pas dépasser en fonction d'un objectif de durabilité.

Dans une quatrième étape, on peut refroidir le dispositif de stockage d'énergie par le moyen de refroidissement. Pour cela, l'unité de commande électronique envoie un ordre de commande pour activer le moyen de refroidissement. Avantageusement, le moyen de refroidissement est alimenté en énergie par l'ensemble d'accumulateurs ce qui a pour effet de faire baisser leur état de charge. Une telle baisse de l'état de charge permet d'augmenter la température maximale sous laquelle peut fonctionner le dispositif de stockage d'énergie. Grâce à l'invention, on agit à la fois sur la température et sur l'état de charge de l'ensemble d'accumulateurs, ce qui permet de prolonger sa durée de vie.

En parallèle, la réflexion des rayons lumineux sur le revêtement de peinture blanche limite l'échauffement du dispositif de stockage d'énergie. Celui-ci peut donc plus facilement être maintenu à une température modéré mais lorsqu'il est utilisé en extérieur, en plein soleil.

L'invention est particulièrement simple à mettre en œuvre. En particulier, les photodiodes et les pigments thermo-chromatiques sont facilement accessibles et peu chers. Une telle solution est moins complexe que l'utilisation d'un thermocouple. De même, l'application d'une peinture sur l'enveloppe externe est également facile à réaliser. En plus d'un contrôle automatique grâce au capteur optique, il est possible de faire un contrôle visuel pour donner une première estimation de la température de l'ensemble d'accumulateurs. La mise en place de l'invention du capteur optique ou de l'élément thermo-conducteur ne requiert pas de démontage ou de modification structurelle de l'ensemble d'accumulateurs.

## Revendications

1. Dispositif de stockage d'énergie (2) comprenant un ensemble d'accumulateurs et un élément thermo-conducteur (4), la température de l'élément thermo-conducteur étant apte à varier en fonction d'une température de l'ensemble d'accumulateurs, l'élément thermo-conducteur comprenant un indicateur thermo-chromatique (5), le dispositif de stockage d'énergie comprenant en outre un capteur optique (6) configuré pour observer l'indicateur thermo-chromatique, le dispositif de stockage d'énergie comprenant une enveloppe externe (3) enveloppant l'ensemble d'accumulateurs, l'enveloppe externe étant recouverte au moins partiellement d'un revêtement de peinture thermo-isolante à base de céramique, l'enveloppe externe comprenant une zone (Z1) dépourvue du revêtement de peinture, ladite zone comprenant l'élément thermo-conducteur (4).

2. Dispositif de stockage d'énergie (2) selon la revendication précédente, **caractérisé en ce que** le capteur optique (6) comprend une ou plusieurs photodiodes.

3. Dispositif de stockage d'énergie (2) selon l'une des revendications précédentes, **caractérisé en ce que** le revêtement de peinture thermo-isolante comprend un coefficient d'absorption solaire inférieur ou égal à 0.4, notamment inférieur ou égale à 02, le coefficient d'absorption solaire d'une surface exprimant, par un nombre compris en 0 et 1, le pourcentage de l'énergie radiante incidente absorbé par cette surface.

4. Dispositif de stockage d'énergie (2) selon l'une des revendications précédentes, **caractérisé en ce que** l'élément thermo-conducteur (4) comprend un matériau dont la conductivité thermique est supérieure ou égale à 120 W/m/K, voire supérieure ou égale à 150 W/m/K.

5. Dispositif de stockage d'énergie (2) selon l'une des revendications précédentes, **caractérisé en ce que** l'élément thermo-conducteur (4) comprend un moyen de dissipation thermique.

6. Dispositif de stockage d'énergie (2) selon l'une des revendications précédentes, **caractérisé en ce que** l'élément thermo-conducteur (4) est en contact direct avec l'ensemble d'accumulateurs.

7. Dispositif de stockage d'énergie (2) selon l'une des revendications 1 à 5, **caractérisé en ce que** l'élément thermo-conducteur (4) comprend un moyen de fixation magnétique et/ou **en ce que** l'élément thermo-conducteur (4) est accolé à l'ensemble d'accumulateurs par l'intermédiaire d'une pâte thermo-conductrice comblant un volume entre une surface de de l'ensemble d'accumulateurs et une surface de l'élément thermo-conducteur.

8. Système de contrôle (1), **caractérisé en ce qu'**il comprend :
- un dispositif de stockage d'énergie (2) selon l'une des revendications précédentes,
- un capteur de tension (9) apte à mesurer une tension aux bornes de l'ensemble d'accumulateurs,
- un moyen de refroidissement (7) du dispositif de stockage d'énergie (2),
- une unité de commande électronique (8) reliée au capteur optique (6) du dispositif de stockage d'énergie, au capteur de tension (9) et au moyen de refroidissement (7).

9. Système de contrôle (1) selon la revendication précédente, **caractérisé en ce que** le moyen de refroidissement (7) est alimenté en énergie par le dispositif de stockage d'énergie (2).

10. Procédé de contrôle d'un dispositif de stockage d'énergie (2) selon l'une des revendications 1 à 7, le procédé de contrôle comprenant:
- une étape d'observation de l'indicateur thermo-chromatique par le capteur optique (6) du dispositif de stockage d'énergie,
- une étape de calcul de l'état de charge de l'ensemble d'accumulateurs,
- une étape de calcul d'une commande du dispositif de stockage d'énergie en fonction de l'observation de l'indicateur thermo-chromatique, et/ou en fonction de l'état de charge de l'ensemble d'accumulateurs et/ou en fonction d'un objectif de durabilité de l'ensemble d'accumulateurs.

11. Procédé de contrôle d'un dispositif de stockage d'énergie selon la revendication précédente, **caractérisé en ce qu'**il comprend une étape de refroidissement du dispositif de stockage d'énergie par un moyen de refroidissement (7) alimenté en énergie par l'ensemble d'accumulateurs, un niveau de température d'arrêt de l'étape de refroidissement étant calculé en fonction de l'état de charge de l'ensemble d'accumulateurs et/ou en fonction d'un objectif de durabilité de l'ensemble d'accumulateurs.

## Patentansprüche

1. Energiespeichervorrichtung (2), die einen Akkumulatorensatz und ein wärmeleitendes Element (4) enthält, wobei die Temperatur des wärmeleitenden Elements abhängig von einer Temperatur des Akkumulatorensatzes variieren kann, wobei das wärmeleitende Element einen thermochromatischen Anzeiger (5) enthält, wobei die Energiespeichervorrichtung außerdem einen optischen Sensor (6) enthält, der konfiguriert ist, den thermochromatischen Anzeiger zu beobachten, wobei die Energiespeichervorrichtung eine den Akkumulatorensatz umhüllende Außenhülle (3) enthält, wobei die Außenhülle zumindest teilweise von einem wärmeisolierendem Farbbelag auf der Basis von Keramik bedeckt wird, wobei die Außenhülle einen Bereich (Z1) ohne Farbbelag enthält, wobei der Bereich das wärmeleitende Element (4) enthält.

2. Energiespeichervorrichtung (2) nach dem vorhergehenden Anspruch, **dadurch gekennzeichnet, dass** der optische Sensor (6) eine oder mehrere Fotodioden enthält.

3. Energiespeichervorrichtung (2) nach einem der vorhergehenden Ansprüche, **dadurch gekennzeichnet, dass** der wärmeisolierende Farbbelag einen Solarabsorptionskoeffizienten geringer als oder gleich 0,4, insbesondere geringer als oder gleich 0,2 enthält, wobei der Solarabsorptionskoeffizient einer Fläche durch eine zwischen 0 und 1 enthaltene Zahl den von dieser Fläche absorbierten Prozentsatz der einfallenden Strahlungsenergie ausdrückt.

4. Energiespeichervorrichtung (2) nach einem der vorhergehenden Ansprüche, **dadurch gekennzeichnet, dass** das wärmeleitende Element (4) ein Material enthält, dessen Wärmeleitfähigkeit höher als oder gleich 120 W/m/K, sogar höher als oder gleich 150 W/m/K ist.

5. Energiespeichervorrichtung (2) nach einem der vorhergehenden Ansprüche, **dadurch gekennzeichnet, dass** das wärmeleitende Element (4) eine Wärmeableitungseinrichtung enthält.

6. Energiespeichervorrichtung (2) nach einem der vorhergehenden Ansprüche, **dadurch gekennzeichnet, dass** das wärmeleitende Element (4) in direktem Kontakt mit dem Akkumulatorensatz ist.

7. Energiespeichervorrichtung (2) nach einem der Ansprüche 1 bis 5, **dadurch gekennzeichnet, dass** das wärmeleitende Element (4) eine magnetische Befestigungseinrichtung enthält und/oder dass das wärmeleitende Element (4) an den Akkumulatorensatz mittels einer wärmeleitenden Paste angefügt wird, die ein Volumen zwischen einer Fläche des Akkumulatorensatzes und einer Fläche des wärmeleitenden Elements ausfüllt.

8. Kontrollsystem (1), **dadurch gekennzeichnet, dass** es enthält:
- eine Energiespeichervorrichtung (2) nach einem der vorhergehenden Ansprüche,
- einen Spannungssensor (9), der geeignet ist, eine Spannung an den Klemmen des Akkumulatorensatzes zu messen,
- eine Kühleinrichtung (7) der Energiespeichervorrichtung (2),
- eine elektronische Steuereinheit (8), die mit dem optischen Sensor (6) der Energiespeichervorrichtung, dem Spannungssensor (9) und der Kühleinrichtung (7) verbunden ist.

9. Kontrollsystem (1) nach dem vorhergehenden Anspruch, **dadurch gekennzeichnet, dass** die Kühleinrichtung (7) von der Energiespeichervorrichtung (2) mit Energie versorgt wird.

10. Verfahren zur Kontrolle einer Energiespeichervorrichtung (2) nach einem der Ansprüche 1 bis 7, wobei das Kontrollverfahren enthält:
- einen Schritt der Beobachtung des thermochromatischen Anzeigers durch den optischen Sensor (6) der Energiespeichervorrichtung,
- einen Schritt der Berechnung des Ladezustands des Akkumulatorensatzes,
- einen Schritt der Berechnung einer Steuerung der Energiespeichervorrichtung abhängig von der Beobachtung des thermochromatischen Anzeigers, und/oder abhängig vom Ladezustand des Akkumulatorensatzes und/oder abhängig von einem Haltbarkeitsziel des Akkumulatorensatzes.

11. Verfahren zur Kontrolle einer Energiespeichervorrichtung nach dem vorhergehenden Anspruch, **dadurch gekennzeichnet, dass** es einen Schritt der Kühlung der Energiespeichervorrichtung durch eine Kühleinrichtung (7) enthält, die vom Akkumulatorensatz mit Energie versorgt wird, wobei eine Höhe der Abschalttemperatur des Kühlschritts abhängig vom Ladezustand des Akkumulatorensatzes und/oder abhängig von einem Haltbarkeitsziel des Akkumulatorensatzes berechnet wird.

## Claims

1. Energy storage device (2) comprising a set of accumulators and a thermally conductive element (4), the temperature of the thermally conductive element being able to vary as a function of a temperature of the set of accumulators, the thermally conductive element comprising a thermochromatic indicator (5), the energy storage device further comprising an optical sensor (6) configured to observe the thermochromatic indicator, the energy storage device comprising an outer envelope (3) enveloping the set of accumulators, the outer envelope being covered at least partially with a ceramic-based thermally insulating paint coating, the outer envelope comprising a zone (Z1) devoid of the paint coating, said zone comprising the thermally conductive element (4).

2. Energy storage device (2) according to the preceding claim, **characterized in that** the optical sensor (6) comprises one or more photodiodes.

3. Energy storage device (2) according to either of the preceding claims, **characterized in that** the thermally insulating paint coating comprises a solar absorption coefficient lower than or equal to 0.4, in particular lower than or equal to 0.2, the solar absorption coefficient of a surface expressing, with a number between 0 and 1, the percentage of incident radiant energy absorbed by this surface.

4. Energy storage device (2) according to one of the preceding claims, **characterized in that** the thermally conductive element (4) comprises a material whose thermal conductivity is higher than or equal to 120 W/m/K, or even higher than or equal to 150 W/m/K.

5. Energy storage device (2) according to one of the preceding claims, **characterized in that** the thermally conductive element (4) comprises a heat dissipation means.

6. Energy storage device (2) according to one of the preceding claims, **characterized in that** the thermally conductive element (4) is in direct contact with the set of accumulators.

7. Energy storage device (2) according to one of Claims 1 to 5, **characterized in that** the thermally conductive element (4) comprises a magnetic fastening means and/or in that the thermally conductive element (4) is affixed to the set of accumulators by way of a thermally conductive paste filling a volume between a surface of the set of accumulators and a surface of the thermally conductive element.

8. Control system (1), **characterized in that** it comprises:
- an energy storage device (2) according to one of the preceding claims,
- a voltage sensor (9) able to measure a voltage across the terminals of the set of accumulators,
- a cooling means (7) for cooling the energy storage device (2),
- an electronic control unit (8) connected to the optical sensor (6) of the energy storage device, to the voltage sensor (9) and to the cooling means (7).

9. Control system (1) according to the preceding claim, **characterized in that** the cooling means (7) is supplied with power by the energy storage device (2).

10. Control method for controlling an energy storage device (2) according to one of Claims 1 to 7, the control method comprising:
- a step of observing the thermochromatic indicator using the optical sensor (6) of the energy storage device,
- a step of calculating the state of charge of the set of accumulators,
- a step of calculating a control command for the energy storage device according to the observation of the thermochromatic indicator, and/or according to the state of charge of the set of accumulators and/or according to a longevity objective for the set of accumulators.

11. Control method for controlling an energy storage device according to the preceding claim, **characterized in that** it comprises a step of cooling the energy storage device using a cooling means (7) supplied with power by the set of accumulators, a stop temperature level for the cooling step being calculated according to the state of charge of the set of accumulators and/or according to a longevity objective for the set of accumulators.
